# EUROPÄISCHE PATENTSCHRIFT

(11) **EP 1 573 411 B1**
(45) Veröffentlichungstag und Bekanntmachung des Hinweises auf die Patenterteilung: **30.09.2009**
(21) Anmeldenummer: 03788873.2
(22) Anmeldetag: 05.12.2003
(51) Int. Cl.: G05B 19/23

(54) **VERFAHREN UND VORRICHTUNG ZUR POSITIONSABHÄNGIGEN STEUERUNG EINES VERSTELLELEMENTES IN EINEM KRAFTFAHRZEUG**
METHOD AND DEVICE FOR THE POSITION-DEPENDENT CONTROL OF A MOBILE ELEMENT IN A MOTOR VEHICLE
PROCEDE ET DISPOSITIF DE COMMANDE D'UN ELEMENT MOBILE DANS UN VEHICULE EN FONCTION DE LA POSITION

(30) Priorität: 10.12.2002 DE 10258476
(43) Veröffentlichungstag der Anmeldung: 14.09.2005
(73) Patentinhaber: Brose Fahrzeugteile GmbH & Co. KG, Coburg, 96450 Coburg (DE)
(72) Erfinder: SEEBERGER, Jürgen, 96182 Reckendorf (DE); ABERT, Carsten, 97437 Hassfurt (DE)
(74) Vertreter: Ninnemann, Detlef
(86) Internationale Anmeldenummer: PCT/DE2003/004089
(87) Internationale Veröffentlichungsnummer: WO 2004/053603

(56) Entgegenhaltungen:
- WO-A-00/29701
- WO-A-01/94140
- US-A- 5 483 135
- US-A- 6 114 822

## Beschreibung

Die Erfindung betrifft ein Verfahren zur positionsabhängigen Steuerung eines mittels einer elektrisch angetriebenen Verstelleinrichtung in einer Antriebsbewegung bewegbaren Verstellelementes in einem Kraftfahrzeug gemäß des Oberbegriffs des Anspruchs 1.

Danach weist die Verstelleinrichtung eine Mehrzahl unterschiedlicher Betriebsmodi auf, und zur Bestimmung der Position des Elementes werden Charakteristika eines Antriebssignals der Verstelleinrichtung, insbesondere eine Welligkeit eines Antriebsstromes, ausgewertet.

Ferner betrifft die Erfindung eine Vorrichtung zur Durchführung eines erfindungsgemäßen Verfahrens gemäß den Merkmalen des Anspruchs 32.

Die verschiedenen Betriebsmodi der Verstelleinrichtung können insbesondere die Aktivierung und Deaktivierung des Automatiklaufs des Verstellelementes in eine seiner Endpositionen und die Nachnormierung der Position des Verstellelementes beim Erreichen einer zugeordneten Normierungsposition umfassen. Jedoch sind darüber hinaus eine Vielzahl von Kombinationen verschiedener Funktionsmerkmale der Verstelleinrichtung als deren unterschiedliche Betriebsmodi denkbar.

Als Charakteristikum des Antriebssignals lassen sich beispielsweise die zeitabhängige Welligkeit des Antriebsstromes oder der Antriebsspannung für einen Elektromotor mit oder auch ohne Kommutator auswerten. Ebenso ist denkbar, die frequenzabhängige Welligkeit des Antriebsstromes oder der Antriebsspannung im Frequenzraum auszuwerten.

Bei bürstenkommutierten Gleichstrommotoren ist das gattungsgemäße Verfahren unter der englischsprachigen Bezeichnung "Ripple-Count" bekannt. Bei derartigen Elektromotoren ist der Motorlaststrom von Stromimpulsen (Ripple) überlagert. Diese Stromspitzen werden durch das vom Kommutator verursachte periodische Umpolen des Rotors verursacht. Es wird dann die Tatsache ausgenutzt, dass der mittels der elektrischen Verstelleinrichtung zurückgelegte Weg des Verstellelementes mit dem zeitabhängigen Auftreten der Stromspitzen des Antriebsstroms der Verstelleinrichtung korreliert. Das heißt, jeder Periode zwischen zwei Stromspitzen des Antriebsstroms lässt sich ein definierter Streckenabschnitt auf dem Verstellweg des Verstellelementes zuordnen. Werden die Stromspitzen während der Verstellbewegung des Verstellelementes mitgezählt, so lässt sich dadurch dessen Verstellweg berechnen.

Das "Ripple-count"-Verfahren ist analog auch bei einem Elektromotor ohne Kommutator anwendbar. Als Charakteristikum des Antriebssignals dient hier die Periode des zum Antrieb des Rotors benötigten Wechselstroms. Jeder Periode beispielsweise zwischen zwei Maxima des Antriebsstromes lässt sich dann wiederum ein definierter Streckenabschnitt auf dem Verstellweg des Verstellelementes zuordnen.

Das "Ripple-count"-Verfahren funktioniert bei bürstenkommutierten Gleichstrommotoren so lange problemlos, wie ein kritisches Lastmoment beim Bewegen des Verstellelementes nicht überschritten werden muss oder sich der Elektromotor nicht in der Ein- oder Ausschaltphase befindet. In diesen kritischen Betriebszuständen sind die für die Ermittlung des Verstellweges auszuwertenden Stromimpulse schwer bzw. gar nicht auswertbar. Dies führt zwangsläufig zu einer Abweichung zwischen der mittels der Stromimpulse ermittelten Position des Verstellelementes und dessen tatsächlicher Position. Insbesondere beim Einsatz des "Ripple-Count"-Verfahrens für fremdkraftbetriebene Kfz-Fensterheber führt dieser Fehler zu folgendem Problem. Der Einklemmschutz des Fensterhebers darf beim automatischen Schließvorgang der Scheibe erst dann deaktiviert werden, wenn der Öffnungsspalt der Fensterscheibe nur noch vier Millimeter beträgt. Wenn der Fehler bei der Positionsbestimmung der Fensterscheibe beispielsweise im Bereich eines Zehntelmillimeters liegt, kann diese gesetzlich vorgeschriebene Bedingung nicht mehr zuverlässig erfüllt werden.

Bei einem aus der WO-A-0194140 bekannten Verfahren zum Bestimmen der Position eines durch einen Gleichstrommotor angetriebenen Elements, beispielsweise einer Fensterscheibe eines Kraftfahrzeugs, wird durch Auswerten der im Ankerstromsignal enthaltenden Stromrippel die absolute Position des angetriebenen Elements bestimmt. Befindet sich das angetriebene Element hierbei in einer Blockposition, also einer Endposition der Bewegungsstrecke, so erfolgt zur verbesserten Bestimmung der Positionsgenauigkeit eine Normierung, bei der der Stromrippelzähler wieder auf Null zurückgesetzt wird und somit eine Fehleraddition über einen längeren Zeitraum verhindert wird. Um hierbei zu vermeiden, dass eine Normierung durchgeführt wird, obwohl das zu verstellende Element sich nicht exakt in der Blockposition befindet, wird bei einem benutzerseitigen Signal zum Herausfahren des angetriebenen Elements aus der Blockposition der Gleichstrommotor zunächst so angesteuert, dass das angetriebene Element zunächst vollständig in die Blockposition eingefahren wird, um die Normierung erst durchzuführen, wenn sichergestellt ist, dass die Position des angetriebenen Elements der tatsächlichen Blockposition entspricht. Erst nach der Normierung wird der Gleichstrommotor dann zum Herausfahren des angetriebenen Elements aus der Blockposition angesteuert.

Der vorliegenden Erfindung liegt die Aufgabe zu Grunde, ein Verfahren gemäß dem Oberbegriff des Anspruchs 1 und eine Vorrichtung bereitzustellen, die trotz der beschriebenen kritischen Betriebszustände der elektrischen Verstelleinrichtung eine sichere und zuverlässige Funktion der elektrischen Verstelleinrichtung gewährleistet.

Diese Aufgabe wird durch ein Verfahren mit den Merkmalen des Anspruchs 1 und durch eine Vorrichtung mit den Merkmalen des Anspruchs 33 gelöst.

Erfindungsgemäß ist vorgesehen, dass bei dem Verfahren aus den Charakteristika des Antriebssignals der Verstelleinrichtung die Position des Verstellelements bestimmt und während des Bewegungsvorgangs des Verstellelements eine die Antriebsbewegung der Verstelleinrichtung beeinflussende Kenngröße und/oder ein die Verstelleinrichtung charakterisierender Kennwert zur Ermittlung eines Fehlerwertes der bestimmten Position des Verstellelementes ausgewertet wird und die Betriebsmodi der Verstelleinrichtung in Abhängigkeit des ermittelten Fehlerwertes gesteuert werden.

Bei den die Antriebsbewegung der Verstelleinrichtung beeinflussenden Kenngrößen kann es sich beispielsweise um die Bordnetzspannung des Kfz, die Betriebstemperatur, die Drehrichtung, die Drehgeschwindigkeit bzw. die auf den Elektromotor einwirkende Last des Verstellelementes und die Abstände zwischen den ausgewerteten Stromimpulsen handeln. Diese Parameter wirken sich zeitlich unmittelbar auf die Antriebsbewegung der Verstelleinrichtung aus und werden im folgenden als Kenngrößen bezeichnet.

Unterschiedlich davon sind folgende Parameter wie beispielsweise die Lebensdauer der Verstelleinrichtung, die Art und Dauer der Schwankungen des Kfz-Bordnetzes, die Anzahl der Bewegungsvorgänge über die Lebensdauer, die spezifischen Funktionsparameter des Elektromotors, die Anzahl und Dauer von Antriebsbewegungen ohne Erreichen eines Endanschlages, die Anzahl der Reversiervorgänge (d.h. Anzahl der Aktivierungsvorgänge der Einklemmschutzvorrichtung), die Anzahl der Drehrichtungsumkehrvorgänge und der aufgrund der spezifischen Ausbildung des Verstellweges zu erwartende Drehmomentverlauf über den gesamten Verstellweg des Verstellelementes (beispielsweise durch die Ausbildung der Fensterdichtung bei einer als Fensterheber ausgebildeten Verstelleinrichtung). Diese Parameter haben nicht unbedingt einen unmittelbaren Einfluss auf die Antriebsbewegung der Verstelleinrichtung, stellen jedoch wichtige charakterisierende Merkmale der Verstelleinrichtung und deren bisheriger Funktionsgeschichte dar; diese Parameter werden daher im folgenden als Kennwerte der Verstelleinrichtung bezeichnet.

Bei der Ermittlung des Fehlerwertes ist sowohl eine relative Ermittlung des Fehlers, beispielsweise durch Vergleichen mit Schwellwerten, als auch eine Fehlerermittlung in Form eines Absolutwertes denkbar.

Das erfindungsgemäße Verfahren ermöglicht auf einfache und kostengünstige Weise, die Steuerung der unterschiedlichen Betriebsmodi der Verstelleinrichtung in Abhängigkeit der vorangehend genannten Parameter derart, dass nach oder während der geschilderten kritischen Betriebszustände der Verstelleinrichtung die Sicherheitserfordernisse des Betriebs der Verstelleinrichtung jederzeit erfüllt sind. Dies kann beispielsweise durch die Deaktivierung des Automatiklaufes der Verstelleinrichtung oder durch die Normierung der Position des Verstellelementes in Abhängigkeit des ermittelten Fehlerwertes erfolgen.

Eine vorteilhafte Weiterbildung des erfindungsgemäßen Verfahrens ist **dadurch gekennzeichnet, dass** aus einer Mehrzahl von Kenngrößen und/oder Kennwerten eine Mehrzahl von Fehlerwerten ermittelt werden. Dadurch erweitern sich die Möglichkeiten, die Mehrzahl unterschiedlicher Betriebsmodi der Verstelleinrichtung auf differenzierte Weise in Abhängigkeit einer Mehrzahl ermittelter Fehlerwerte anzusteuern.

Weiterhin ist es von Vorteil, aus mindestens zwei der ermittelten Fehlerwerte mittels einer mathematischen Beziehung einen verknüpften Fehlerwert zu bilden, und mindestens einen Betriebsmodus der Verstelleinrichtung in Abhängigkeit von dem verknüpften Fehlerwert zu steuern. Als mathematische Verknüpfung kommen dabei insbesondere eine Addition oder eine Multiplikation in Frage. Auf diese Weise lassen sich aus der Menge der Kennwerte und/oder Kenngrößen eine Mehrzahl verknüpfter Fehlerwerte bilden.

Bei der Ermittlung von Fehlerwerten ist es weiterhin vorteilhaft, wenn mindestens ein Fehlerwert in Abhängigkeit einer Mehrzahl von Kennwerten und/oder Kenngrößen mittels einer Fuzzy-Logic ermittelt wird.

Bei der Ermittlung relativer Fehlerwerte lassen sich Kenngrößen und/oder Kennwerte bevorzugt mit einem jeweils zugeordneten Schwellwert vergleichen. Dabei ist es besonders vorteilhaft, wenn Kenngrößen und/oder Kennwerte derart transformiert werden, dass sie zur Ermittlung der Fehlerwerte mit einem oder mehreren einheitlichen Schwellwerten vergleichbar sind. Auf diese Weise lässt sich die Zahl der für das Verfahren benötigten Schwellwerte verringern.

Bei einer weiteren Variante des erfindungsgemäßen Verfahrens werden unterschiedliche Betriebsmodi der Verstelleinrichtung mittels einer mathematischen Verknüpfung ermittelter Fehlerwerte gesteuert. Wie bereits vorangehend dargestellt, sind dafür sämtliche Arten mathematischer Verknüpfungen denkbar. Insbesondere ist eine Ausgestaltung des erfindungsgemäßen Verfahrens möglich, bei der die unterschiedlichen Betriebsmodi der Verstelleinrichtung mittels einer mehrdimensionalen matrizenartigen Verknüpfung ermittelter Fehlerwerte gesteuert werden. Dadurch lassen sich komplexe Konstellationen zwischen den unterschiedlichen Kenngrößen und Kennwerten der Verstelleinrichtung mit entsprechenden Betriebsmodi kombinieren.

Wie bereits vorangehend angedeutet unterscheiden sich die unterschiedlichen Betriebsmodi der Verstelleinrichtung beispielsweise dadurch, dass mindestens eine der folgenden Eigenschaften der Verstelleinrichtung verändert wird: Verstellgeschwindigkeit des Verstellelements, Aktivität einer Einklemmschutzvorrichtung, Aktivität eines Automatiklaufs zum automatischen Verfahren des bewegten Elements in eine erste und/oder zweite Endlage und Normierung einer ermittelten Position des Verstellelements in einer erreichten Endlage. Durch die Vielzahl realisierbarer Betriebsmodi und deren differenzierte Ansteuerung mittels der vorangehend beschriebenen Varianten wird eine intelligente Steuerung der Verstelleinrichtung bereitgestellt, die Sicherheitsanforderungen bei unterschiedlichsten Benutzerprofilen unter komplexen Konstellationen der ausgewerteten Parameter (Kenngrößen/Kennwerten) ermöglicht.

In vier, im folgenden dargestellten, bevorzugten Ausführungsformen des Verfahrens ist der Automatiklauf für das Verstellelement in einem ersten Betriebsmodus der Verstelleinrichtung deaktiviert. Dies kann sowohl den Automatiklauf in dessen eine Endlage als auch in dessen andere Endlage betreffen. Weiterhin ist ein zweiter Betriebsmodus der Verstelleinrichtung vorgesehen, der dadurch gekennzeichnet ist, dass beim Erreichen einer Endlage des Verstellelements eine Normierung der Position des Verstellelements in der Endlage durchgeführt wird. Außerdem wird die Verstelleinrichtung nach einer erfolgten Normierung in einen Grundbetriebsmodus versetzt, bei dem der Automatiklauf aktiviert wird und beim Erreichen einer Endlage des Verstellelements keine Normierung der Position des Verstellelements durchgeführt wird.

Ein erstes bevorzugtes Ausführungsbeispiel des erfindungsgemäßen Verfahrens ist, **dadurch gekennzeichnet, dass** eine Mehrzahl der Kenngrößen und/oder eine Mehrzahl der Kennwerte sukzessiv mit einem zugeordneten ersten Entscheidungsschwellwert verglichen werden und die Verstelleinrichtung beim Überschreiten des ersten Entscheidungsschwellwertes aus dem Grundbetriebsmodus in den ersten Betriebsmodus versetzt wird. Dabei kann entweder jeder Kenngröße und jedem Kennwert ein individueller Entscheidungsschwellwert zugeordnet sein oder durch eine geeignete Transformation der Parameter (Kennwerte/Kenngrößen) lassen sich diese mit einem gemeinsamen Entscheidungsschwellwert vergleichen. Es ist ebenso denkbar, den Vergleich der Parameter mit den zugeordneten Schwellwerten nicht sukzessiv, also seriell, sondern parallel vorzunehmen. Der vorzunehmende Vergleich findet somit im wesentlichen gleichzeitig und unabhängig voneinander statt.

Dieses erste Ausführungsbeispiel des Verfahrens ist weiterhin **dadurch gekennzeichnet, dass** die Mehrzahl der Kenngrößen und/oder die Mehrzahl der Kennwerte zusätzlich sukzessiv mit einem zugeordneten zweiten Entscheidungsschwellwert verglichen werden und die Verstelleinrichtung beim Überschreiten des zweiten Entscheidungsschwellwertes aus dem Grundbetriebsmodus in den zweiten Betriebsmodus versetzt wird. Hier bietet sich ebenfalls die Möglichkeit, durch eine geeignete Transformation der Parameter mit einem einheitlichen Entscheidungsschwellwert für alle Parameter zu arbeiten.

Ein zweites Ausführungsbeispiel des Verfahrens ist **dadurch gekennzeichnet, dass** zusätzlich zum Vergleich einer Mehrzahl von Parametern mit Entscheidungsschwellwerten eine Teilmenge der Kenngrößen und/oder eine Teilmenge der Kennwerte mit einem zugeordneten ersten Schwellwert verglichen werden und beim Überschreiten des ersten Schwellwertes der Betrag eines Fehlerindikators um einen Teilfehler erhöht wird. Das Überschreiten des jeweiligen Schwellwertes führt somit nicht unmittelbar zu einer Änderung des Betriebsmodus der Verstelleinrichtung, sondern zunächst zu einer Erhöhung des Betrags eines ersten Fehlerindikators.

Das zweite Ausführungsbeispiel des Verfahrens ist weiterhin, **dadurch gekennzeichnet, dass** die Teilmenge der Kenngrößen und/oder die Teilmenge der Kennwerte nach dem Unterschreiten des ersten Schwellwertes mit einem zugeordneten zweiten Schwellwert verglichen werden und beim Überschreiten des zweiten Schwellwertes der Betrag des Fehlerindikators um einen Teilfehler erhöht wird.

Der jeweils ermittelte Betrag des Teilfehlers ist dabei bevorzugt als Funktion der zugeordneten Kenngröße oder des zugeordneten Kennwertes ausgebildet. Auf diese Weise lässt sich auf einfache Weise eine Gewichtung des Einflusses der unterschiedlichen Parameter auf den Fehlerindikator vornehmen.

Bei diesem Ausführungsbeispiel wird der Fehlerindikator als Summe der Teilfehler ermittelt. Es ist jedoch ebenso denkbar, den Fehlerindikator durch eine andere geeignete mathematische Verknüpfung einzelner Teilfehler, beispielsweise als Multiplikation zu bilden.

Der insbesondere als Summe der Teilfehler gebildete Betrag des Fehlerindikators wird nach jeder Erhöhung durch einen Teilfehler mit einem ersten Entscheidungsschwellwert verglichen und die Verstelleinrichtung beim Überschreiten des ersten Entscheidungsschwellwertes in den ersten Betriebsmodus versetzt.

Bevorzugt wird der Betrag des Fehlerindikators mit einem zweiten Entscheidungsschwellwert verglichen, wenn der erste Entscheidungsschwellwert unterschritten wurde. Die Verstelleinrichtung wird dann beim Überschreiten des zweiten Entscheidungsschwellwertes in den zweiten Betriebsmodus versetzt. Auf diese Weise lassen sich die Betriebsmodi abhängig von den Parametern schrittweise aktivieren. Beispielsweise kann der erste Entscheidungsschwellwert dabei die tolerierbare Fehlerschwelle darstellen, bis zu der ein Automatiklauf des Verstellelementes ohne sicherheitstechnische Bedenken möglich ist. Falls dieser erste Entscheidungsschwellwert überschritten ist, wird dann zunächst der Automatiklauf deaktiviert. Der Vergleich des Fehlerindikators mit dem zweiten Entscheidungsschwellwert legt fest, ob zusätzlich zum Deaktivieren des Automatiklaufes eine Nachnormierung der Position des Verstellelementes beim Erreichen einer der Endlagen erforderlich ist oder nicht.

Alternativ dazu ist es ebenso denkbar, dass nach dem Überschreiten des ersten Entscheidungsschwellwertes der Automatiklauf zwar noch nicht deaktiviert wird, jedoch beim nächsten Erreichen einer Endlage eine Neunormierung des Verstellelementes zwingend vorgenommen wird. Der Automatiklauf wird in diesem Falle nur dann deaktiviert, wenn nach dem Überschreiten des ersten Entscheidungsschwellwertes und vor dem Erreichen einer Endlage des Verstellelementes weitere Fehler (Überschreitung des zweiten Entscheidungsschwellwertes) hinzukommen, die die Deaktivierung des Automatiklaufs notwendig machen.

Grundsätzlich ist denkbar, diese Ausführungsbeispiele dahingehend abzuwandeln, dass unterschiedliche Fehlerindikatoren verwendet werden. Diese Fehlerindikatoren können wiederum einzeln oder verknüpft zu einer Veränderung des Betriebsmodus' der Verstelleinrichtung führen.

Ein drittes Ausführungsbeispiel des erfindungsgemäßen Verfahrens ist **dadurch gekennzeichnet, dass** eine Mehrzahl von Kenngrößen und/oder eine Mehrzahl von Kennwerten sukzessiv mit einem zugeordneten ersten Schwellwert verglichen werden und beim Überschreiten des ersten Schwellwertes der Betrag eines Fehlerindikators um einen Teilfehler erhöht wird. Im Unterschied zum vorangehenden Ausführungsbeispiel werden die Parameter ausschließlich mit Schwellwerten verglichen, so dass sie über den dadurch gebildeten Fehlerindikator in indirekter Weise Einfluss auf die Steuerung der Betriebsmodi der Verstelleinrichtung erhalten. Dabei ist der Betrag des Teilfehlers bevorzugt als eine Funktion der zugeordneten Kenngrößen oder Kennwerte ausgebildet.

Wie beim vorangehenden Ausführungsbeispiel wird der Betrag des Fehlerindikators mit einem ersten Entscheidungsschwellwert verglichen und die Verstelleinrichtung beim Überschreiten des ersten Entscheidungsschwellwertes in den ersten Betriebsmodus versetzt.

Ebenso wird der Betrag des Fehlerindikators mit einem zweiten Entscheidungsschwellwert verglichen, wenn der erste Entscheidungsschwellwert unterschritten wurde und die Verstelleinrichtung wird dann beim Überschreiten des zweiten Entscheidungsschwellwertes in den zweiten Betriebsmodus versetzt.

In einem vierten Ausführungsbeispiel des erfindungsgemäßen Verfahrens werden zusätzlich zu dem ersten und zweiten Entscheidungsschwellwert zum Vergleich mit dem Fehlerindikator zwei weitere Entscheidungsschwellwerte eingesetzt. Die Verstelleinrichtung wird dabei aus dem Grundbetriebsmodus in den ersten Betriebsmodus versetzt, wenn eine Teilmenge der Kenngrößen und/oder eine Teilmenge der Kennwerte einen zugeordneten ersten Entscheidungsschwellwert überschreiten. Bei dieser Variante ist eine Veränderung des Betriebsmodus sowohl über den Fehlerindikator als auch über einen direkten Vergleich eines Parameters mit einem Entscheidungsschwellwert möglich. Dazu lassen sich die Parameter entweder in zwei Gruppen aufteilen, d.h. einerseits die Mehrzahl der Parameter, die nach einem Vergleich mit einem Schwellwert den Fehlerindikator beeinflussen und andererseits die Teilmenge der Parameter, die direkt mit einem Entscheidungsschwellwert verglichen werden. Oder es ist ebenfalls denkbar, dass diese beiden Gruppen von Parametern eine Schnittmenge aufweisen, die sowohl auf indirekte Weise über den Fehlerindikator als auch auf direkte Weise über einen Entscheidungsschwellwert die Betriebsmodi der Verstelleinrichtung steuern.

Weiterhin ist es denkbar, dass die Verstelleinrichtung aus dem Grundbetriebsmodus in den zweiten Betriebsmodus versetzt wird, wenn die Teilmenge der Kenngrößen und/oder die Teilmenge der Kennwerte einen weiteren, zweiten zugeordneten Entscheidungsschwellwert überschreiten.

Alle vorangehend genannten Ausführungsbeispiele des erfindungsgemäßen Verfahrens, die einen Fehlerindikator aufweisen, haben gemeinsam, dass der Fehlerindikator nach einer Normierung der Position des Verstellelements in der Endlage zurückgesetzt wird. Dabei ist ebenfalls denkbar, dass der Fehlerindikator in bestimmten Situationen nicht vollständig auf ein Nullniveau zurückgesetzt wird. Dies kann beispielsweise dann sinnvoll sein, wenn die Verstelleinrichtung eine gewisse Funktionszeit überschritten hat oder die Betriebstemperatur überhöht ist.

Das vorangehend beschriebene Verfahren eignet sich insbesondere dazu, für die als motorische Fensterhebeeinrichtung ausgebildete Verstelleinrichtung einer Fensterscheibe in einem Kraftfahrzeugs eingesetzt zu werden. Ebenso ist der Einsatz des Verfahrens zum Bewegen eines Fahrzeugsitzelementes in einem Kraftfahrzeug möglich.

Die der vorliegenden Erfindung zu Grunde liegende Aufgabe wird auch durch eine Vorrichtung zur Durchführung eines der vorangehend beschriebenen Verfahrens gelöst. Eine derartige Vorrichtung umfasst eine Verstelleinrichtung, die eine elektromotorische Antriebseinrichtung und eine Elektronikeinrichtung, insbesondere mit einem Microcontroller, zur Auswertung der Kenngrößen und/oder der Kennwerte und zur Steuerung der Funktion und der Betriebsmodi der Verstelleinrichtung aufweist, wobei die Verstelleinrichtung zum Bewegen einer Scheibe oder eines Fahrzeugsitzelementes in einem Kraftfahrzeug ausgebildet ist.

Weitere Aspekte und Vorteile des erfindungsgemäßen Verfahrens werden anhand der Beschreibung dreier Ausführungsbeispiele in den folgenden Zeichnungen deutlich.

Es zeigen:
- Figur 1: schematische Darstellung eines ersten Ausführungsbeispiels des erfindungsgemäßen Verfahrens zur Steuerung einer Kfz-Fensterscheibe, wobei die Parameter der Verstelleinrichtung ausschließlich mit Entscheidungsschwellwerten verglichen werden;
- Figur 2: schematische Darstellung eines zweiten Ausführungsbeispiels, wobei die Parameter der Verstelleinrichtung ausschließlich mit Schwellwerten zur Bildung eines Fehlerindikators verglichen werden und
- Figur 3: schematische Darstellung eines dritten Ausführungsbeispiels, wobei eine erste Gruppe aller Parameter mit Entscheidungsschwellwerten und eine zweite Gruppe aller Parameter zur Bildung eines Fehlerindikators mit Schwellwerten verglichen werden.

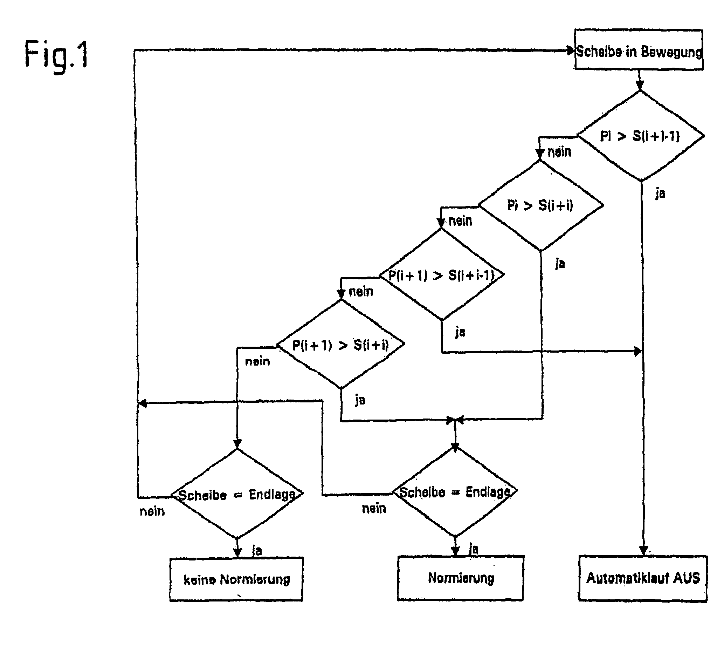

In Figur 1 ist ein erstes Ausführungsbeispiel des erfindungsgemäßen Verfahrens in Form eines Flussdiagramms dargestellt. Zur Veranschaulichung wurde die Anwendung der Verfahrens für eine Verstelleinrichtung einer Kfz-Fensterscheibe gewählt.

Zunächst befindet sich die Verstelleinrichtung in ihrem Grundbetriebsmodus. Die durch die Verstelleinrichtung bestimmte Position der Fensterscheibe stimmt dann im Rahmen des tolerierbaren Fehlers mit der tatsächlichen Position der Fensterscheibe überein und beim Erreichen einer der Endlagen der Fensterscheibe ist es daher nicht notwendig, eine Nachnormierung der Fensterscheibe vorzunehmen.

Während die Scheibe in Bewegung ist, wird der Parameter Pi zunächst mit einem ersten Entscheidungsschwellwert Sᵢ₊ᵢ₋₁ verglichen. Wird dieser erste Entscheidungsschwellwert Sᵢ₊ᵢ₋₁ überschritten führt dies dazu, dass die Automatiklauffunktion der Verstelleinrichtung deaktiviert wird. Dies könnte beispielsweise der Fall sein, wenn Schwankungen der Bordnetzspannung derart aufgetreten sind, dass der absolute Fehler der durch die Verstelleinrichtung bestimmten Scheibenposition im Bereich größer gleich einiger Zehntelmillimeter liegt.

Der durch den Vergleich zwischen dem Parameter Pi und dem ersten Entscheidungsschwellwert Sᵢ₊ᵢ₋₁ ermittelte Fehlerwert ist somit ein digitaler Wert. Entweder der Entscheidungsschwellwert Sᵢ₊ᵢ₋₁ wurde überschritten, was zu einer Änderung des Betriebsmodus der Verstelleinrichtung führt oder der Entscheidungsschwellwert Sᵢ₊ᵢ₋₁ wurde unterschritten, woraufhin der Parameter Pi mit einem zweiten Entscheidungsschwellwert Sᵢ₊ᵢ verglichen wird. Der ermittelte Fehlerwert wird wiederum als digitaler Wert des Vergleichs des Parameters Pi mit dem zweiten Entscheidungsschwellwert Si+i ermittelt. Wird dieser zweite Entscheidungsschwellwert Sᵢ₊ᵢ überschritten, so wird der Betriebsmodus der Verstelleinrichtung dahingehend geändert, dass beim nächsten Erreichen einer Endlage die Position der Fensterscheibe neu normiert wird. Dies kann der Fall sein, wenn beispielsweise einige kleinere Fehler aufgetreten sind, die jedoch ein Deaktivieren des Automatiklaufs nicht erzwingen. Jedoch wird beim nächsten Erreichen einer Endlage eine Normierung der Scheibenposition vorgenommen.

Wird auch dieser zweite Entscheidungsschwellwert Sᵢ₊ᵢ nicht durch den Parameter Pᵢ überschritten, so wird der nächste Parameter Pᵢ₊₁ zum Vergleich mit dem ersten Entscheidungsschwellwert Sᵢ₊ᵢ₋₁ herangezogen. Die Konsequenzen des Über- bzw. Unterschreitens des ersten Entscheidungsschwellwertes Sᵢ₊ᵢ₋₁ sind beim Vergleich mit dem zweiten Parameter Pᵢ₊₁ identisch zum vorangehend dargestellten Vergleich mit dem ersten Parameter Pi. Auf diese Weise werden die gesamten Parameter Pᵢ (für i=1, 2,...) sukzessiv abgefragt und zur Ermittlung eines digitalen Fehlerwertes herangezogen.

Der erste Entscheidungsschwellwert Sᵢ₊ᵢ₋₁ gewährleistet, dass die in Abhängigkeit der Parameter Pᵢ festgelegten Sicherheitserfordernisse im Hinblick auf einen Automatiklauf der Fensterscheibe insbesondere in die geschlossene Endlage erfüllt sind.

Der zweite Entscheidungsschwellwert Sᵢ₊ᵢ gewährleistet, dass die Nachnormierung der mittels der Verstelleinrichtung bestimmten Position der Fensterscheibe in einer ihrer Endlagen rechtzeitig vorgenommen wird, damit das Überschreiten des ersten Entscheidungsschwellwertes und somit das Deaktivieren des Automatiklaufs nicht notwendig wird. Befindet sich die Verstelleinrichtung in dem der Nachnormierung zugeordneten Betriebsmodus, so werden die Parameter Pᵢ weiterhin so lange gemäß des dargestellten Ablaufs mit den beiden Entscheidungsschwellwerten Sᵢ₊ᵢ₋₁ und Sᵢ₊ᵢ verglichen, wie die Fensterscheibe in Bewegung ist. Erst beim Erreichen einer Endlage wird die Normierung der bestimmten Position durchgeführt und die Verstelleinrichtung in den Grundbetriebsmodus zurückgesetzt.

Sind alle Parameter Pᵢ mit den beiden Entscheidungsschwellwerten Sᵢ₊ᵢ₋₁ und Sᵢ₊ᵢ verglichen worden und keiner der Schwellwerte wurde überschritten, so befindet sich die Verstelleinrichtung nach wie vor im Grundbetriebsmodus, d.h. auch beim Erreichen einer der Endlagen der Fensterscheiben wird keine Normierung der mittels der Verstelleinrichtung bestimmten Position vorgenommen. Die Parameter Pᵢ werden dann während des Bewegungsvorgangs der Fensterscheibe weiterhin gemäß dem dargestellten Ablauf mit den beiden Entscheidungsschwellwerten Sᵢ₊ᵢ₋₁ und Sᵢ₊ᵢ verglichen, um eine permanente Überwachung der Verstelleinrichtung zu gewährleisten.

Da die Parameter Pi unterschiedliche physikalische Einheiten aufweisen ist es sinnvoll, die erfassten Größen der Parameter Pᵢ derart zu transformieren, damit sie mit einem einheitlichen ersten bzw. zweiten Entscheidungsschwellwert vergleichbar sind. Es ist jedoch ebenso denkbar, dass zu jedem Parameter Pᵢ ein individueller erster und zweiter Entscheidungsschwellwert vorliegt. Aus Gründen der Übersichtlichkeit ist diese Variante jedoch nicht im Flussdiagramm dargestellt worden.

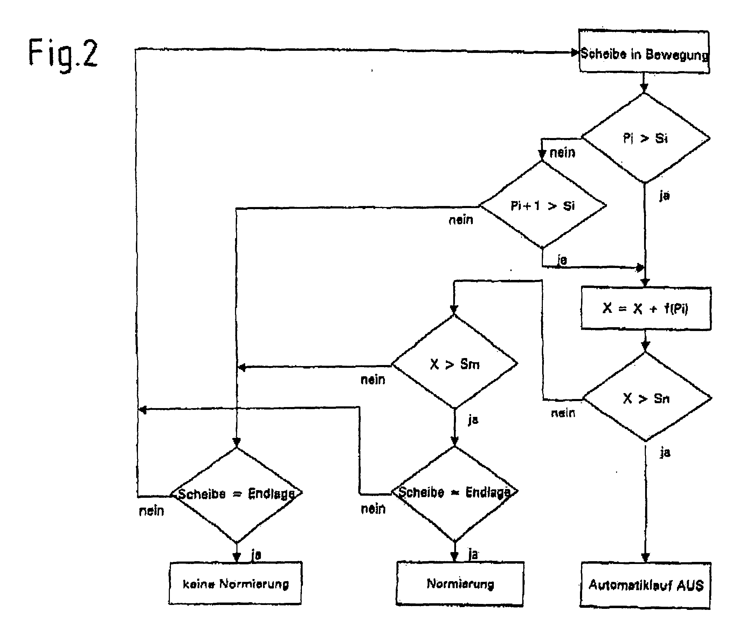

In Figur 2 ist das Flussdiagramm eines zweiten Ausführungsbeispiels des erfindungsgemäßen Verfahrens dargestellt. Zunächst befindet sich die Verstelleinrichtung wie beim vorangehenden Ausführungsbeispiel beschrieben im Grundbetriebsmodus. Während der Bewegung der Fensterscheibe werden die Parameter Pᵢ mit einem Schwellwert Sᵢ verglichen. Wird dieser Schwellwert Sᵢ dabei überschritten, so wird anschließend ein Fehlerindikator X um einen Teilfehler f(Pᵢ) erhöht.

Wird der Schwellwert Sᵢ nicht überschritten, so folgt der Vergleich des nächsten Parameters Pᵢ₊₁ mit dem Schwellwert Sᵢ. Wird der Schwellwert Sᵢ dabei überschritten, so folgt daraus die Erhöhung des Fehlerindikators X um einen Teilfehler f(Pᵢ₊₁). Jeder Teilfehler f(Pᵢ) ist dabei bevorzugt eine Funktion des Parameters Pᵢ.

Nach jeder Erhöhung des Fehlerindikators X wird dieser anschließend mit einem ersten Entscheidungsschwellwert Sn verglichen. Wird der Entscheidungsschwellwert Sn überschritten, so wird der Betriebsmodus der Verstelleinrichtung dahingehend geändert, dass dessen Automatiklauf, insbesondere in die geschlossene Endlage, deaktiviert wird.

Wird der erste Entscheidungsschwellwert S*ₙ* nicht überschritten, so wird der Fehlerindikator X noch mit einem zweiten Entscheidungsschwellwert Sₘ verglichen. Kommt es zur Überschreitung dieses zweiten Entscheidungsschwellwertes Sₘ, so wird der Betriebsmodus aktiviert, bei dem die mittels der Verstelleinrichtung bestimmte Position der Fensterscheibe beim Erreichen einer der Fensterscheiben-Endlagen neu normiert wird. Während der Bewegung der Fensterscheibe bis zum Erreichen einer Endlage werden die Parameter Pᵢ weiterhin gemäß dem vorangehend dargestellten Schema mit dem Schwellwert Sᵢ verglichen, um eine permanente Kontrolle der Verstelleinrichtung zu gewährleisten.

Im Unterschied zum ersten Ausführungsbeispiel des Verfahrens wird nicht jeder Parameter Pᵢ selbst, sondern der Fehlerindikator X mit den beiden Entscheidungsschwellwerten Sₙ und Sₘ verglichen. Dadurch lässt sich die Entscheidung des Wechsels zwischen zwei Betriebsmodi von mehreren Parametern Pᵢ abhängig machen. Deren Einfluss auf den Fehlerindikator X ist dadurch einstellbar, dass der ermittelte Teilfehler f(Pᵢ) als eine Funktion des Parameters Pᵢ ausgebildet ist.

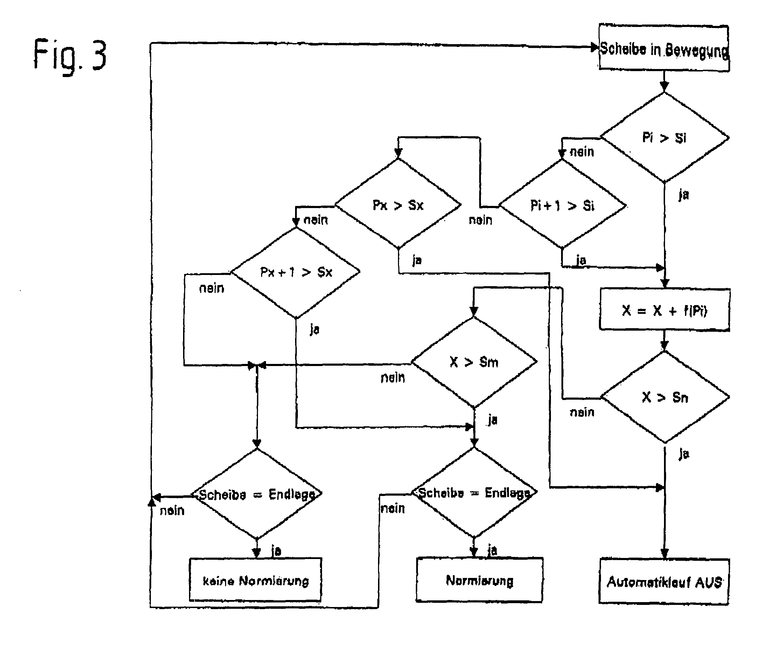

In Figur 3 ist das dritte Ausführungsbeispiel des Verfahrens in Form eines Flussdiagrammes dargestellt. Dabei handelt es sich um eine Kombination des ersten und des zweiten Ausführungsbeispiels.

Die Gesamtmenge der Parameter umfasst hier in zwei Parametergruppen Pᵢ und Pₓ. Entweder die Gesamtmenge der Parameter wird dabei in zwei Parametergruppen zerteilt, oder es besteht noch eine gewisse Teilmenge an Parametern, die zu jeweils beiden Gruppen gehören. Die erste Parametergruppe Pᵢ, Pᵢ₊₁ wird gemäß dem zweiten Ausführungsbeispiel mit einem Schwellwert Sᵢ verglichen. Wird dieser Schwellwert überschritten, so folgt analog zum zweiten Ausführungsbeispiel die Erhöhung des Fehlerindikators X um den Betrag eines Teilfehlers f(Pᵢ) und der erhöhte Fehlerindikator X wird mit den Entscheidungsschwell-werten Sₙ und Sₘ verglichen.

Unterschreiten sämtliche Parameter Pᵢ der ersten Parametergruppe den Schwellwert Sᵢ, so werden im Unterschied zum zweiten Ausführungsbeispiel die Parameter Pₓ, Pₓ₊₁ der zweiten Parametergruppe nacheinander mit einem Entscheidungsschwellwert Sₓ verglichen. Falls der erste Parameter Pₓ der zweiten Parametergruppe den Entscheidungsschwellwert Sₓ überschreitet wird der Betriebsmodus ohne Automatiklauf der Verstelleinrichtung aktiviert. Falls der Parameter Pₓ den Entscheidungsschwellwert Sₓ unterschreitet, so wird der nächste Parameter Pₓ₊₁ der zweiten Parametergruppe mit dem Entscheidungsschwellwert Sₓ verglichen. Überschreitet der Parameter Pₓ₊₁ den Entscheidungsschwellwert Sₓ, so wird der Betriebsmodus der Verstelleinrichtung aktiviert, bei dem die mittels der Verstelleinrichtung bestimmte Position der Fensterscheibe beim nächsten Erreichen einer der Endlagen neu normiert wird. So lange wie eine der Endlagen noch nicht erreicht ist, werden die Parameter beider Parametergruppen gemäß dem vorangehend dargestellten Ablauf abgefragt, um eine Kontrolle der Verstelleinrichtung anhand der Parameter zu gewährleisten.

### Bezugszeichenliste

- Pᵢ, Pₓ: Parameter (Kennwerte und/oder Kenngrößen)
- Sᵢ: Schwellwert
- Sₓ, Sₙ, Sₘ: Entscheidungsschwellwerte
- Sᵢ₊ᵢ₋₁ Sᵢ₊ᵢ: Entscheidungsschwellwerte
- X: Fehlerindikator
- f(Pⱼ): Teilfehler

## Patentansprüche

1. Verfahren zur positionsabhängigen Steuerung eines mittels einer elektrisch angetriebenen Verstelleinrichtung in einer Antriebsbewegung bewegbaren Verstellelementes in einem Kraftfahrzeug, wobei die Verstelleinrichtung eine Mehrzahl unterschiedlicher Betriebsmodi aufweist und Charakteristika eines Antriebssignals der Verstelleinrichtung, insbesondere eine Welligkeit eines Antriebsstromes, zur Bestimmung der Position des Verstellelementes ausgewertet werden,
**dadurch gekennzeichnet,**
**dass** aus den Charakteristika des Antriebssignals der Verstelleinrichtung die Position des Verstellelements bestimmt und während des Bewegungsvorgangs des Verstellelements eine die Antriebsbewegung der Verstelleinrichtung beeinflussende Kenngröße (Pᵢ) und/oder ein die Verstelleinrichtung charakterisierender Kennwert (Pᵢ) zur Ermittlung eines Fehlerwertes der bestimmten Position des Verstellelementes ausgewertet wird und die Betriebsmodi der Verstelleinrichtung in Abhängigkeit des ermittelten Fehlerwertes gesteuert werden.

2. Verfahren gemäß Anspruch 1, **dadurch gekennzeichnet, dass** aus einer Mehrzahl von Kenngrößen (Pᵢ) und/oder Kennwerten (Pᵢ) eine Mehrzahl von Fehlerwerten ermittelt werden.

3. Verfahren gemäß Anspruch 2, **dadurch gekennzeichnet, dass** aus mindestens zwei der ermittelten Fehlerwerte mittels einer mathematischen Beziehung ein verknüpfter Fehlerwert gebildet wird, und mindestens ein Betriebsmodus der Verstelleinrichtung in Abhängigkeit von dem verknüpften Fehlerwert gesteuert wird.

4. Verfahren gemäß Anspruch 3, **dadurch gekennzeichnet, dass** die mathematische Beziehung eine Addition mindestens zweier ermittelter Fehlerwerte umfasst.

5. Verfahren gemäß Anspruch 3 oder 4, **dadurch gekennzeichnet, dass** die mathematische Verknüpfung eine Multiplikation mindestens zweier ermittelter Fehlerwerte umfasst.

6. Verfahren gemäß einem der Ansprüche 3 bis 5, **dadurch gekennzeichnet, dass** eine Mehrzahl verknüpfter Fehlerwerte gebildet wird.

7. Verfahren gemäß einem der Ansprüche 2 bis 6, **dadurch gekennzeichnet, dass** mindestens ein Fehlerwert als absoluter Fehlerwert ermittelt wird.

8. Verfahren gemäß einem der Ansprüche 2 bis 7, **dadurch gekennzeichnet, dass** mindestens ein Fehlerwert in Abhängigkeit einer Mehrzahl von Kennwerten (Pᵢ) und/oder Kenngrößen (Pᵢ) mittels einer Fuzzy-Logic ermittelt wird.

9. Verfahren gemäß einem der Ansprüche 2 bis 8, **dadurch gekennzeichnet, dass** eine Mehrzahl von Kenngröße (Pᵢ) und/oder Kennwerten (Pᵢ) zur Ermittlung von Fehlerwerten mit einem zugeordneten Schwellwert (Sᵢ) verglichen werden.

10. Verfahren gemäß Anspruch 9, **dadurch gekennzeichnet, dass** die Mehrzahl von Kenngrößen (Pᵢ) und/oder die Kennwerten (Pᵢ) derart transformiert werden, dass sie zur Ermittlung der Fehlerwerte mit einem oder mit mehreren einheitlichen Schwellwerten (Sᵢ) vergleichbar sind.

11. Verfahren gemäß einem der Ansprüche 2 bis 10, **dadurch gekennzeichnet, dass** unterschiedliche Betriebsmodi der Verstelleinrichtung mittels einer mathematischen Verknüpfung der ermittelten Fehlerwerte gesteuert werden.

12. Verfahren gemäß einem der Ansprüche 2 bis 11, **dadurch gekennzeichnet, dass** unterschiedlichen Betriebsmodi der Verstelleinrichtung mittels einer mehrdimensionalen matrizenartigen Verknüpfung der ermittelten Fehlerwerte gesteuert werden.

13. Verfahren gemäß einem der Ansprüche 2 bis 12, **dadurch gekennzeichnet, dass** in den unterschiedlichen Betriebsmodi der Verstelleinrichtung mindestens eine der folgenden Eigenschaften der Verstelleinrichtung verändert wird: Verstellgeschwindigkeit des Verstellelements, Aktivität einer Einklemmschutzvorrichtung, Aktivität eines Automatiklaufs zum automatischen Verfahren des bewegten Elements in eine erste und/oder zweite Endlage und Normierung einer ermittelten Position des Verstellelements in einer erreichten Endlage.

14. Verfahren gemäß Anspruch 13, **dadurch gekennzeichnet, dass** der Automatiklauf für das Verstellelement in einem ersten Betriebsmodus der Verstelleinrichtung deaktiviert wird.

15. Verfahren gemäß Anspruch 14, **dadurch gekennzeichnet, dass** in einem zweiten Betriebsmodus der Verstelleinrichtung beim Erreichen einer Endlage des Verstellelements eine Normierung der Position des Verstellelements in der Endlage durchgeführt wird.

16. Verfahren gemäß Anspruch 15, **dadurch gekennzeichnet, dass** die Verstelleinrichtung nach der Normierung in einen Grundbetriebsmodus versetzt wird, bei dem der Automatiklauf aktiviert wird und beim Erreichen einer Endlage des Verstellelements keine Normierung der Position des Verstellelements durchgeführt wird.

17. Verfahren gemäß Anspruch 15 oder 16, **dadurch gekennzeichnet, dass** eine Mehrzahl der Kenngrößen (Pᵢ, Pₓ) und/oder eine Mehrzahl der Kennwerte (Pᵢ, Pₓ) sukzessiv mit einem zugeordneten ersten Entscheidungsschwellwert (Sᵢ₊ᵢ₋₁, Sₓ) verglichen werden und die Verstelleinrichtung beim Überschreiten des ersten Entscheidungsschwellwertes (Sᵢ₊ᵢ₋₁, Sₓ) aus dem Grundbetriebsmodus in den ersten Betriebsmodus versetzt wird.

18. Verfahren gemäß Anspruch 17, **dadurch gekennzeichnet, dass** die Mehrzahl der Kenngrößen (Pᵢ) und/oder die Mehrzahl der Kennwerte (Pᵢ) zusätzlich sukzessiv mit einem zugeordneten zweiten Entscheidungsschwellwert (Sᵢ₊ᵢ) verglichen werden und die Verstelleinrichtung beim Überschreiten des zweiten Entscheidungsschwellwertes (Sᵢ₊ᵢ) aus dem Grundbetriebsmodus in den zweiten Betriebsmodus versetzt wird.

19. Verfahren gemäß Anspruch 17 oder 18, **dadurch gekennzeichnet, dass** eine Teilmenge der Kenngrößen (Pᵢ) und/oder eine Teilmenge der Kennwerte (Pᵢ) mit einem zugeordneten ersten Schwellwert (Sᵢ) verglichen werden und beim Überschreiten des ersten Schwellwertes (Sᵢ) der Betrag eines Fehlerindikators (X) um einen Teilfehler (f(Pᵢ)) erhöht wird.

20. Verfahren gemäß Anspruch 19, **dadurch gekennzeichnet, dass** die Teilmenge der Kenngrößen (Pᵢ) und/oder die Teilmenge der Kennwerte (Pᵢ) nach dem Unterschreiten des ersten Schwellwertes (Sᵢ) mit einem zugeordneten zweiten Schwellwert verglichen werden und beim Überschreiten des zweiten Schwellwertes der Betrag des Fehlerindikators (X) um einen Teilfehler (f(Pᵢ)) erhöht wird.

21. Verfahren gemäß einem der Ansprüche 19 oder 20, **dadurch gekennzeichnet, dass** der Betrag des Teilfehlers (f(Pᵢ)) eine Funktion der zugeordneten Kenngröße (Pᵢ) oder des zugeordneten Kennwertes (Pᵢ) darstellt.

22. Verfahren gemäß einem der Ansprüche 19 bis 21, **dadurch gekennzeichnet, dass** der Betrag des Fehlerindikators (X) nach der Erhöhung durch einen Teilfehler (f(Pᵢ)) mit einem ersten Entscheidungsschwellwert (Sₙ) verglichen wird und die Verstelleinrichtung beim Überschreiten des ersten Entscheidungsschwellwertes (Sₙ) in den ersten Betriebsmodus versetzt wird.

23. Verfahren gemäß Anspruch 22, **dadurch gekennzeichnet, dass** der Betrag des Fehlerindikators (X) mit einem zweiten Entscheidungsschwellwert (Sₘ) verglichen wird, wenn der erste Entscheidungsschwellwert (Sₙ) unterschritten wurde und die Verstelleinrichtung beim Überschreiten des zweiten Entscheidungsschwellwertes (Sₘ) in den zweiten Betriebsmodus versetzt wird.

24. Verfahren gemäß Anspruch 15 oder 16, **dadurch gekennzeichnet, dass** eine Mehrzahl von Kenngrößen (Pᵢ) und/oder eine Mehrzahl von Kennwerten (Pᵢ) sukzessiv mit einem zugeordneten ersten Schwellwert (Sᵢ) verglichen werden und beim Überschreiten des ersten Schwellwertes (Sᵢ) der Betrag eines Fehlerindikators (X) um einen Teilfehler (f(Pᵢ)) erhöht wird.

25. Verfahren gemäß Anspruch 24, **dadurch gekennzeichnet, dass** der Betrag des Teilfehlers (f(Pᵢ)) eine Funktion der zugeordneten Kenngrößen (Pᵢ) oder Kennwerte (Pᵢ) darstellt.

26. Verfahren gemäß einem der Ansprüche 25 oder 26, **dadurch gekennzeichnet, dass** der Betrag des Fehlerindikators (X) mit einem ersten Entscheidungsschwellwert (Sₙ) verglichen wird und die Verstelleinrichtung beim Überschreiten des ersten Entscheidungsschwellwertes (Sₙ) in den ersten Betriebsmodus versetzt wird.

27. Verfahren gemäß Anspruch 26, **dadurch gekennzeichnet, dass** der Betrag des Fehlerindikators (X) mit einem zweiten Entscheidungsschwellwert (Sₘ) verglichen wird, wenn der erste Entscheidungsschwellwert (Sₙ) unterschritten wurde und die Verstelleinrichtung beim Überschreiten des zweiten Entscheidungsschwellwertes (Sₘ) in den zweiten Betriebsmodus versetzt wird.

28. Verfahren gemäß Anspruch 27, **dadurch gekennzeichnet, dass** die Verstelleinrichtung aus dem Grundbetriebsmodus in den ersten Betriebsmodus versetzt wird, wenn eine Teilmenge der Kenngrößen (Pₓ) und/oder eine Teilmenge der Kennwerte (Pₓ) einen zugeordneten ersten Entscheidungsschwellwert (Sₓ) überschreiten.

29. Verfahren gemäß einem der Ansprüche 20 bis 28, **dadurch gekennzeichnet, dass** der Fehlerindikator (X) nach einer Normierung der Position des Verstellelements in der Endlage zurückgesetzt wird.

30. Verfahren gemäß einem der vorangehenden Ansprüche, **dadurch gekennzeichnet, dass** die Verstelleinrichtung als motorische Fensterhebeeinrichtung einer Fensterscheibe in einem Kraftfahrzeug eingesetzt wird.

31. Verfahren gemäß einem der Ansprüche 1 bis 29, **dadurch gekennzeichnet, dass** die Verstelleinrichtung zur Bewegung eines Fahrzeugsitzelementes in einem Kraftfahrzeug eingesetzt wird.

32. Vorrichtung, eingerichtet zur Durchführung eines Verfahrens nach einem der Ansprüche 1 bis 29, mit einer Verstelleinrichtung, die eine elektromotorische Antriebseinrichtung und eine Elektronikeinrichtung, insbesondere mit einem Microcontroller, zur Auswertung der Kenngrößen (Pᵢ) und/oder der Kennwerte (Pᵢ) und zur Steuerung der Funktion und der Betriebsmodi der Verstelleinrichtung aufweist, wobei die Verstelleinrichtung zum Bewegen einer Scheibe oder eines Fahrzeugsitzelementes in einem Kraftfahrzeug ausgebildet ist.

## Claims

1. Method for the position depending control of an adjustment element which is movable by an electrically driven adjustment device in a drive motion in a motor vehicle, wherein the adjustment device comprises a number of different operation modes and characteristics of a drive signal of the adjustment device, in particular a ripple of a drive current, are analyzed to determine the position of the adjustment element,
**characterized in that**
from the characteristics of the drive signal of the adjustment device the position of the adjustment element is determined and during the motion action of the adjustment element a characteristic parameter (Pᵢ) influencing the drive motion of the adjustment device and/or a characteristic value (Pᵢ) characterizing the adjustment device are analyzed to determine an error value of the determined position of the adjustment element and the operation modes of the adjustment device are controlled in dependence of the determined error value.

2. Method according to claim 1, **characterized in that** from a number of characteristic parameters (Pᵢ) and/or characteristic values (Pᵢ) a number of error values are determined.

3. Method according to claim 2, **characterized in that** from at least two of the determined error values a combined error value is formed using a mathematical relation and at least one operation mode of the adjustment device is controlled in dependence of the combined error value.

4. Method according to claim 3, **characterized in that** the mathematical relation contains an addition of at least two determined error values.

5. Method according to claim 3 or 4, **characterized in that** the mathematical combination contains a multiplication of at least two determined error values.

6. Method according to one of claims 3 to 5, **characterized in that** a number of combined error values is formed.

7. Method according to one of claims 2 to 6, **characterized in that** at least one error value is determined as an absolute error value.

8. Method according to one of the claims 2 to 7, **characterized in that** at least one error value is determined in dependence of a number of characteristic parameters (Pᵢ) and/or characteristic values (Pᵢ) using a Fuzzy-logic.

9. Method according to one of the claims 2 to 8, **characterized in that** a number of characteristic parameters (Pᵢ) and/or characteristic values (Pᵢ) is compared to an associated threshold value (Sᵢ) to determine error values.

10. Method according to claim 9, **characterized in that** the number of characteristic parameters (Pᵢ) and/or the characteristic values (Pᵢ) is transformed such that they are comparable with one or with multiple uniform threshold values (Sᵢ) to determine the error values.

11. Method according to one of the claims 2 to 10, **characterized in that** different operation modes of the adjustment device are controlled using a mathematical combination of the determined error values.

12. Method according to one of the claims 2 to 11, **characterized in that** different operation modes of the adjustment device are controlled using a multidimensional matrix-like combination of the determined error values.

13. Method according to one of the claims 2 to 12, **characterized in that** in the different operation modes of the adjustment device at least one of the following characteristics of the adjustment device is modified: adjustment speed of the adjustment element, activity of a jam protection device, activity of an automatic operation for the automatic adjustment of the moved element in a first and/or second end position and normalization of a determined position of the adjustment element in a reached end position.

14. Method according to claim 13, **characterized in that** the automatic operation for the adjustment element is deactivated in a first operation mode of the adjustment device.

15. Method according to claim 14, **characterized in that** in a second operation mode of the adjustment device a normalization of the position of the adjustment element in the end position is performed when reaching an end position of the adjustment device.

16. Method according to claim 15, **characterized in that** the adjustment device is set into a base operation mode after normalization, in which the automatic operation is activated and no normalization of the position of the adjustment element is performed when reaching an end position of the adjustment element.

17. Method according to claim 15 or 16, **characterized in that** a number of characteristic parameters (Pᵢ, Pₓ) and/or a number of characteristic values (Pᵢ, Pₓ) are compared successively with an associated first decision threshold value (Sᵢ₊ᵢ₋₁, Sₓ) and the adjustment device is set from the base operation mode into a first operation mode if the first decision threshold value (Sᵢ₊ᵢ₋₁, Sₓ) is exceeded.

18. Method according to claim 17, **characterized in that** the number of characteristic parameters (Pᵢ) and/or the number of characteristic values (Pᵢ) are compared in addition successively with an associated second decision threshold value (Sᵢ₊ᵢ) and the adjustment device is set from the base operation mode into the second operation mode if the second decision threshold value (Sᵢ₊ᵢ) is exceeded.

19. Method according to claim 17 or 18, **characterized in that** a subset of the characteristic parameters (Pᵢ) and/or a subset of the characteristic values (Pᵢ) is compared with an associated first threshold value (Sᵢ) and the amount of an error indicator (X) is increased by a partial error (f(Pᵢ)) if the first threshold value (Sᵢ) is exceeded.

20. Method according to claim 19, **characterized in that** the subset of the characteristic parameters (Pᵢ) and/or the subset of the characteristic values (Pᵢ) is compared with an associated second threshold value after the first threshold value (Sᵢ) is undershot and the amount of the error indicator (S) is increased by a partial error (f(Pᵢ)) if the second threshold value is exceeded.

21. Method according to one of claims 19 or 20, **characterized in that** the amount of the partial error (f(Pᵢ)) represents a function of the associated characteristic parameter (Pᵢ) or the associated characteristic value (Pᵢ).

22. Method according to one of the claims 19 to 21, **characterized in that** the amount of the error indicator (X) is compared with a first decision threshold value (Sₙ) after the increase by a partial error (f(Pᵢ)) and the adjustment device is set into the first operation mode if the first decision threshold value (Sₙ) is exceeded.

23. Method according to claim 22, **characterized in that** the amount of the error indicator (X) is compared with a second decision threshold value (Sₘ) if the first decision threshold value (Sₙ) is undershot and the adjustment device is set into the second operation mode if the second decision threshold value (Sₘ) is exceeded.

24. Method according to claim 15 or 16, **characterized in that** a number of characteristic parameters (Pᵢ) and/or a number of characteristic values (Pᵢ) is compared successively with an associated first threshold value (Sᵢ) and the amount of an error indicator (X) is increased by a partial error (f(Pᵢ)) if the first threshold value (Sᵢ) is exceeded.

25. Method according to claim 24, **characterized in that** the amount of the partial error (f(Pᵢ)) represents a function of the associated characteristic parameters (Pᵢ) or characteristic values (Pᵢ).

26. Method according to one of the claims 25 or 26, **characterized in that** the amount of the error indicator (X) is compared with a first decision threshold value (Sₙ) and the adjustment device is set into the first operation mode if the first decision threshold value (Sₙ) is exceeded.

27. Method according to claim 26, **characterized in that** the amount of the error indicator (X) is compared with a second decision threshold value (Sₘ) if the first decision threshold value (Sₙ) was undershot and the adjustment device is set into the second operation mode if the second decision threshold value (Sₘ) is exceeded.

28. Method according to claim 27, **characterized in that** the adjustment device is set from the base operation mode into the first operation mode if a subset of the characteristic parameters (Pₓ) and/or a subset of the characteristic values (Pₓ) exceeds an associated first decision threshold value (Sₓ).

29. Method according to one of the claims 20 to 28, **characterized in that** the error indicator (X) is reset after a normalization of the position of the adjustment element in the end position.

30. Method according to one of the preceding claims, **characterized in that** the adjustment device is used as a motor-driven window lifter device of a window in a motor vehicle.

31. Method according to one of the claims 1 to 29, **characterized in that** the adjustment device is used for moving a vehicle seat element in a motor vehicle.

32. Device, set up for performing a method according to one of the claims 1 to 29, with an adjustment device, which comprises an electro-motoric drive device and an electronic device, in particular with a microcontroller, for analyzing the characteristic parameters (Pᵢ) and/or the characteristic values (Pᵢ) and for the control of the functioning and the operation modes of the adjustment device, wherein the adjustment device is set up for moving a window or a vehicle seat element in a motor vehicle.

## Revendications

1. Procédé pour commander en fonction de la position un élément mobile dans un véhicule automobile, déplaçable dans un mouvement d'entraînement au moyen d'un dispositif de déplacement entraîné par voie électrique, dans lequel le dispositif de déplacement comprend une pluralité de modes de fonctionnement différents, et les caractéristiques d'un signal d'entraînement du dispositif de déplacement, en particulier un caractère ondulatoire d'un courant d'entraînement, sont évaluées pour déterminer la position de l'élément de déplacement,
**caractérisé en ce que,** à partir des caractéristiques du signal d'entraînement du dispositif de déplacement, on détermine la position de l'élément de déplacement, et pendant le processus de mouvement de l'élément de déplacement, on évalue une grandeur caractéristique (Pᵢ) qui influence le mouvement d'entraînement du dispositif de déplacement et/ou une valeur caractéristique (Pᵢ) qui caractérise le dispositif de déplacement pour déterminer une valeur d'erreur de la position déterminée de l'élément de déplacement, et les modes de fonctionnement du dispositif de déplacement sont commandés en fonction de la valeur d'erreur déterminée.

2. Procédé selon la revendication 1, **caractérisé en ce que** l'on détermine une pluralité de valeurs d'erreur à partir d'une pluralité de grandeurs caractéristiques (Pᵢ) et/ou de valeurs caractéristiques (Pᵢ).

3. Procédé selon la revendication 2, **caractérisé en ce que** l'on forme une valeur d'erreur chaînée au moyen d'une relation mathématique à partir d'au moins deux des valeurs d'erreur déterminées, et on commande au moins un mode de fonctionnement du dispositif de déplacement en fonction de la valeur d'erreur chaînée.

4. Procédé selon la revendication 3, **caractérisé en ce que** la relation mathématique comprend une addition d'au moins deux valeurs d'erreur déterminées.

5. Procédé selon la revendication 3 ou 4, **caractérisé en ce que** le chaînage mathématique comprend une multiplication d'au moins deux valeurs d'erreur déterminées.

6. Procédé selon l'une des revendications 3 à 5, **caractérisé en ce que** l'on forme une pluralité de valeurs d'erreur chaînées.

7. Procédé selon l'une des revendications 2 à 6, **caractérisé en ce que** l'on détermine au moins une valeur d'erreur à titre de valeur d'erreur absolue.

8. Procédé selon l'une des revendications 2 à 7, **caractérisé en ce que** l'on détermine au moins une valeur d'erreur en fonction d'une pluralité de valeurs caractéristiques (Pᵢ) et/ou de grandeurs caractéristiques (Pᵢ) au moyen d'une logique floue.

9. Procédé selon l'une des revendications 2 à 8, **caractérisé en ce que,** pour déterminer les valeurs d'erreur, on compare une pluralité de grandeurs caractéristiques (Pᵢ) et/ou de valeurs caractéristiques (Pᵢ) avec une valeur seuil associée (Sᵢ).

10. Procédé selon la revendication 9, **caractérisé en ce que** la pluralité de grandeurs caractéristiques (Pᵢ) et/ou de valeurs caractéristiques (Pᵢ) sont transformées de telle manière que, pour déterminer les valeurs d'erreur, elles peuvent être comparées avec une ou plusieurs valeurs seuil unitaires (Sᵢ).

11. Procédé selon l'une des revendications 2 à 10, **caractérisé en ce que** l'on commande des modes de fonctionnement différents du dispositif de déplacement au moyen d'un chaînage mathématique des valeurs d'erreur déterminées.

12. Procédé selon l'une des revendications 2 à 11, **caractérisé en ce que** l'on commande des modes de fonctionnement différents du dispositif de déplacement au moyen d'un chaînage du type matrice multidimensionnelle des valeurs d'erreur déterminées.

13. Procédé selon l'une des revendications 2 à 12, **caractérisé en ce que,** dans les différents modes de fonctionnement du dispositif de déplacement, on modifie l'une au moins des propriétés suivantes du dispositif de déplacement : vitesse de déplacement de l'élément de déplacement, activité d'un dispositif de protection anti-pincement, activité d'un programme automatique pour le déplacement automatique de l'élément déplaçable jusque vers une première et/ou une seconde position finale et normalisation d'une position déterminée de l'élément de déplacement dans une position finale atteinte.

14. Procédé selon la revendication 13, **caractérisé en ce que** le programme automatique pour l'élément de déplacement est désactivé dans un premier mode de fonctionnement du dispositif de déplacement.

15. Procédé selon la revendication 14, **caractérisé en ce que,** dans un second mode de fonctionnement du dispositif de déplacement, lorsqu'on atteint une position finale de l'élément de déplacement, on exécute une normalisation de la position de l'élément de déplacement dans la position finale.

16. Procédé selon la revendication 15, **caractérisé en ce que** le dispositif de déplacement est placé, après la normalisation, dans un mode de fonctionnement de base dans lequel le programme automatique est activé, et lorsqu'on atteint une position finale de l'élément de déplacement, on n'effectue aucune normalisation de la position de l'élément de déplacement.

17. Procédé selon la revendication 15 ou 16, **caractérisé en ce que** l'on compare successivement une pluralité de grandeurs caractéristiques (Pᵢ, Pₓ) et/ou une pluralité de valeurs caractéristiques (Pᵢ, Pₓ) à une première valeur seuil de décision associée (Sᵢ₊ⱼ₋₁, Sₓ), et en cas de dépassement de la première valeur seuil de décision (Sᵢ₊ⱼ₋₁, Sₓ) le dispositif de déplacement est changé depuis le mode de fonctionnement de base vers le premier mode de fonctionnement.

18. Procédé selon la revendication 17, **caractérisé en ce que** l'on compare la pluralité des grandeurs caractéristiques (Pᵢ) et/ou la pluralité des valeurs caractéristiques (Pᵢ) additionnellement successivement à une seconde valeur seuil de décision associée (Sᵢ₊ⱼ), et en cas de dépassement de la seconde valeur seuil de décision (Sᵢ₊ⱼ), le dispositif de déplacement est changé depuis le mode de fonctionnement de base vers le second mode de fonctionnement.

19. Procédé selon la revendication 17 ou 18, **caractérisé en ce que** l'on compare un groupe partiel des grandeurs caractéristiques (Pᵢ) et/ou un groupe partiel des valeurs caractéristiques (Pᵢ) à une première valeur seuil associée (Sᵢ) et, en cas de dépassement de la première valeur seuil, (Sᵢ), l'amplitude d'un indicateur d'erreur (X) est augmentée d'une erreur partielle (f(Pᵢ)).

20. Procédé selon la revendication 19, **caractérisé en ce que,** après passage au-dessous de la première valeur seuil (Sᵢ), on compare le groupe partiel des grandeurs caractéristiques (Pᵢ) et/ou le groupe partiel des valeurs caractéristiques (Pᵢ) à une seconde valeur seuil associée, et en cas de dépassement de la seconde valeur seuil, l'amplitude de l'indicateur d'erreur (S) est augmentée d'une erreur partielle (f(Pᵢ).

21. Procédé selon l'une des revendications 19 ou 20, **caractérisé en ce que** l'amplitude de l'erreur partielle (f(Pᵢ)) représente une fonction de la grandeur caractéristique associée (Pᵢ) ou de la valeur caractéristique associée (Pᵢ).

22. Procédé selon l'une des revendications 19 à 21, **caractérisé en ce que,** après l'augmentation d'une erreur partielle (f(Pᵢ)), on compare l'amplitude de l'indicateur d'erreur (X) à une première valeur seuil de décision (Sₙ), et lors du dépassement de la première valeur seuil de décision (Sₙ), le dispositif de déplacement est changé vers le premier mode de fonctionnement.

23. Procédé selon la revendication 22, **caractérisé en ce que** l'on compare l'amplitude de l'indicateur d'erreur (X) à une seconde valeur seuil de décision (Sₙ) quand on passe au-dessous de la première valeur seuil de décision (Sₙ), et en cas de dépassement de la seconde valeur seuil de décision (Sₙ), le dispositif de déplacement est changé vers le second mode de fonctionnement.

24. Procédé selon la revendication 15 ou 16, **caractérisé en ce qu'**on compare une pluralité de grandeurs caractéristiques (Pᵢ) et/ou une pluralité de valeurs caractéristiques (Pᵢ) successivement avec une première valeur seuil associée (Sᵢ) et, en cas de dépassement de la première valeur seuil (Sᵢ), l'amplitude de l'indicateur d'erreur (X) est augmentée d'une erreur partielle (f(Pᵢ)).

25. Procédé selon la revendication 24, **caractérisé en ce que** l'amplitude de l'erreur partielle (f(Pᵢ) représente une fonction des grandeurs caractéristiques (Pᵢ) ou des valeurs caractéristiques (Pᵢ) associées.

26. Procédé selon l'une des revendications 25 ou 26, **caractérisé en ce que** l'on compare l'amplitude de l'indicateur d'erreur (X) avec une première valeur seuil de décision (Sₙ), et en cas de dépassement de la première valeur seuil de décision (Sₙ) le dispositif de déplacement est changé vers le premier mode de fonctionnement.

27. Procédé selon la revendication 26, **caractérisé en ce que** l'on compare l'amplitude de l'indicateur d'erreur (X) avec une seconde valeur seuil de décision (Sₘ) lorsqu'on est passé au-dessous de la première valeur seuil de décision (Sₙ), et en cas de dépassement de la seconde valeur seuil de décision (Sₘ) le dispositif de déplacement est changé vers le second mode de fonctionnement.

28. Procédé selon la revendication 27, **caractérisé en ce que** le dispositif de déplacement est changé depuis le mode de fonctionnement de base vers le premier mode de fonctionnement si un groupe partiel des grandeurs caractéristiques (Pₓ) et/ou un groupe partiel des valeurs caractéristiques (Pₓ) passe au-dessus d'une première valeur seuil de décision associée (Sₓ).

29. Procédé selon l'une des revendications 20 à 28, **caractérisé en ce que,** après une normalisation de la position de l'élément de déplacement dans la position finale, l'indicateur d'erreur (X) est remis à zéro.

30. Procédé selon l'une des revendications précédentes, **caractérisé en ce que** le dispositif de déplacement est employé dans un véhicule automobile à titre de dispositif de lève-vitre motorisé pour une vitre de fenêtre.

31. Procédé selon l'une des revendications 1 à 29, **caractérisé en ce que** le dispositif de déplacement est employé dans un véhicule automobile pour le mouvement d'un élément d'un siège du véhicule.

32. Appareil, conçu pour mettre en oeuvre un procédé selon l'une des revendications 1 à 29, comprenant un dispositif de déplacement qui comprend un système d'entraînement à moteur électrique et un système électronique, en particulier avec un microcontrôleur, pour exploiter des grandeurs caractéristiques (Pᵢ) et/ou des valeurs caractéristiques (Pᵢ), et pour commander la fonction et les modes de fonctionnement du dispositif de déplacement, dans lequel le dispositif de déplacement est réalisé pour déplacer une vitre ou un élément d'un siège dans un véhicule automobile.
